# EUROPÄISCHE PATENTANMELDUNG

(11) **EP 1 310 286 A1**
(43) Veröffentlichungstag der Anmeldung: **14.05.2003**
(21) Anmeldenummer: 02450258.5
(22) Anmeldetag: 08.11.2002
(51) Int. Cl.: B01D 1/28, B01D 1/02, B01D 5/00, C02F 1/04

(54) **Verfahren zur Behandlung von Flüssigkeiten sowie zugehörige Anlage zur Durchführung des Verfahrens**

(30) Priorität: 09.11.2001 AT 17722001
(71) Anmelder: Haberl, Martin, Salzburg (AT)
(72) Erfinder: Haberl, Martin, Salzburg (AT)
(74) Vertreter: Itze, Peter, Dipl.-Ing.

(57) **Zusammenfassung**

Die durch ein Schema verdeutlichte Erfindung betrifft ein Verfahren zur Behandlung von Flüssigkeiten, insbesondere zum Entsalzen, Enthärten und Desinfizieren von Wasser mittels Destillation. Die zu behandelnde Flüssigkeit wird zum Verdampfen und anschließend zum Kondensieren gebracht. Für die Verdampfung der zu behandelnden Flüssigkeit wird die durch die Kondensation der durch Kompression erwärmten Dämpfe der zu behandelnden Flüssigkeit freiwerdende Wärme eingesetzt.

Die schematisch dargestellte Anlage zur Durchführung des beschriebenen Verfahrens besteht aus einem ersten Behälter (1) in dem sich ein Kondensator (3) befindet und einem zweiten Behälter (2) in dem sich ein Wärmetauscher (6) befindet. Der erste Behälter (1) ist als Verdampfungsgefäß zur Verdampfung der zu behandelnden Flüssigkeit und der Kondensator (3) als Wärmetauscher ausgebildet. Dem Kondensator (3) ist ein Verdichter (4) zur Kompres-sion der Dämpfe der zu behandelnden Flüssigkeit vorgeschaltet und eine Leitung (5) zur Überleitung der in dem Kondensator (3) teilkondensierten Dämpfe in einen zweiten Behälter (2) nachgeschaltet.

## Beschreibung

Die Erfindung betrifft ein Verfahren zur Behandlung von Flüssigkeiten, insbesondere zum Entsalzen, Enthärten und Desinfizieren von Wasser, mittels einstufiger Destillation, wobei bei der Destillation als Wärmeenergie zur Verdampfung die bei der Kondensation der Dämpfe freiwerdende Wärmeenergie ausgenützt wird.

Bei einem bekannten Verfahren (AT 378 762) wird für die Verdampfung der zu behandelnden Flüssigkeit dem Verdampfungsgefäß während des gesamten Prozesses Wärme von außen zugeführt. Diese Ausführungsform hat den Nachteil, daß sie durch die ständig notwendige Wärmezufuhr von außen mit einem sehr hohen Energieaufwand verbunden und damit sehr teuer im Betrieb ist.

Bei einem bekannten Verfahren der eingangs genannten Art (WO 93/10048 A1) handelt es sich um ein mehrstufiges, unter Normaldruck arbeitendes Verfahren, bei welchem für den Betrieb ständig Frischdampf zugesetzt werden muß, wodurch zur Durchführung dieses bekannten Verfahrens eine aufwendige Anlage mit Anschluß an eine Frischdampfquelle erforderlich ist.

Dieser Nachteil wird erfindungsgemäß dadurch vermieden, daß die zu kondensierenden Dämpfe vor der Kondensation abgezogen und zur Erwärmung komprimiert werden, worauf dann die Kondensation im Wärmeaustausch mit der zu verdampfenden zu behandelnden Flüssigkeit erfolgt. Durch diese Methode wird eine besonders wirtschaftliche Möglichkeit, Flüssigkeiten zu verdampfen und wieder zu kondensieren geschaffen. Es wird nämlich der Wirkungsgrad der Anlage dadurch verbessert, daß die Kondensation aus den komprimierten Dämpfen erfolgt, wodurch aufgrund der durch die Kompression erzielten hohen Temperaturdifferenz zwischen zu kondensierenden Dämpfen und der Kondenssationsfläche sowie der Entspannung der Dämpfe ein rasches Kondensieren erzielt, sodaß es in einem einstufigen Verfahren ermöglicht ist, einen entsprechenden Wirkungsgrad bei der Behandlung der Flüssigkeit zu erzielen. Zudem kann aufgrund des Ansaugens bzw. Abziehens der Dämpfe aus dem Verdampfungsgefäß gewünschtenfalls in diesem ein Unterdruck erzeugt werden, der das Verdampfen der Flüssigkeit weiter begünstigt.

All diese Faktoren zusammen ermöglichen es, ein einstufiges Destillationsverfahren zum Behandeln von Flüssigkeiten zu erreichen, welches in energetischer Hinsicht sehr günstig ist und frei von zusätzlichen Heizdampfquellen überall betrieben werden kann. Es ist lediglich ein entsprechender Antrieb für den Kompressor erforderlich, der auf jede herkömmliche Weise betrieben werden kann.

In weiterer Ausgestaltung der Erfindung ist vorgesehen, dass für die Erwärmung der zu behandelnden, frisch zugeführten Flüssigkeit die durch die Restkondensation der durch Kompression erwärmten und schon teilkondensierten Dämpfe der zu behandelnden Flüssigkeit freiwerdende Wärme eingesetzt wird. Durch diese Ausgestaltung wird eine Rückgewinnung der Wärme für den Prozeß erreicht und somit eine weitere Reduktion des notwendigen Energieeinsatzes bewirkt.

Die Anlage zur Durchführung des erfindungsgemäßen Verfahrens besteht aus einem ersten Behälter in dem sich ein Kondensator befindet und einem zweiten Behälter in dem sich ein Wärmetauscher befindet. Bei einer Anlage dieser Art (siehe ebenfalls AT 378 762) sind der Wärmetauscher zur Verdampfung der zu behandelnden Flüssigkeit und der Kondensator zur Kondensation der Dämpfe der zu behandelnden Flüssigkeit in voneinander getrennten Be-hältern untergebracht. Diese Ausführungsform hat den Nachteil, daß zur Verdampfung der zu behandelnden Flüssigkeit im Wärmetauscher Wärme von außen zugeführt werden muß und zur Kondensation der Dämpfe der zu behandelnden Flüssigkeit Kälte von außen zugefürt werden muß, der Prozeß daher mit einem hohen Energieaufwand verbunden ist.

Dieser Nachteil wird erfindungsgemäß dadurch vermieden, daß bei einer Anlage der eingangs genannten Art der erste Behälter als Verdampfungsgefäß zur Verdampfung der zu behandelnden Flüssigkeit und der Kondensator als Wärmetauscher ausgebildet ist, wobei dem Kondensator ein Verdichter zur Kompression der Dämpfe der zu behandelnden Flüssigkeit vorgeschaltet ist und eine Leitung zur Überleitung der in dem Kondensator teilkondensierten Dämpfe in einen zweiten Behälter nachgeschaltet ist. Durch diese Ausgestaltung wird be-wirkt, daß einerseits zur Verdampfung der zu behandelnden Flüssigkeit im Wärmetauscher keine Wärme von außen zugeführt werden muß und andererseits zur Kondensation der Dämpfe der zu behandelnden Flüssigkeit kein Kühlmedium von außen zugefürt werden muß, sodaß der Prozeß mit einem Mindesteinsatz an Energie, nämlich lediglich der zum Betrieb des Verdichters notwendigen Energiezufuhr, verbunden ist.

Eine weitere Ausführungsform der Erfindung sieht vor, daß der Verdichter als Pumpe oder Kompressor ausgeführt ist. Durch eine solche Ausführungsform wird eine einfache und kostengünstige Möglichkeit der Verdichtung der Dämpfe erreicht.

In weiterer Ausgestaltung der Erfindung ist vorgesehen, daß dem Wärmetauscher im zweiten Behälter ein Zufluß für die zu behandelnde Flüssigkeit vorgeschaltet und eine Leitung zur Überleitung der vorgewärmten zu behandelnden Flüssigkeit in den ersten Behälter nachgeschaltet ist. Durch diese Ausgestaltung wird eine Nutzung der Abwärme des Prozesses bewirkt und somit eine weitere Reduktion der notwendigen Energiezufuhr erzielt.

Eine weitere Ausführungsform der Erfindung besteht darin, daß der Wärmetauscher im zweiten Behälter als Kondensator zur Restkondensation der dem zweiten Behälter über die dem im ersten Behälter befindlichen Kondensator nachgeschaltete Leitung zugeführten teil-kondensierten Dämpfe ausgebildet ist. Durch eine solche Ausführungsform wird erreicht, daß die zum Verdichten des Dampfes von außen zugeführte Energie in Form von Wärmeenergie in den Prozeß rückgeführt wird und somit die notwendige Energiezufuhr stark reduziert wird und das Verfahren sehr wirtschaftlich arbeitet.

In weiterer Ausgestaltung der Erfindung ist im zweiten Behälter der Abfluß für die aus dem Verfahren gewonnene Flüssigkeit und im ersten Behälter der Abfluß für die während des Verdampfungsschrittes anfallende Sole vorgesehen. Diese Ausführungsform stellt eine sehr einfache und zweckmäßige Ausgestaltung des Abflusses der anfallenden Flüssigkeiten dar.

Eine weitere Ausführungsform der Erfindung besteht darin, daß der zweite Behälter über dem ersten Behälter angeordnet ist. Durch diese Ausgestaltung wird die Notwendigkeit eines aktiven Transports der zu behandlenden Flüssigkeit bzw. des Dampfes davon von einem Behälter in den anderen vermieden, somit benötigt dieser Verfahrensschritt keine Energie-zufuhr.

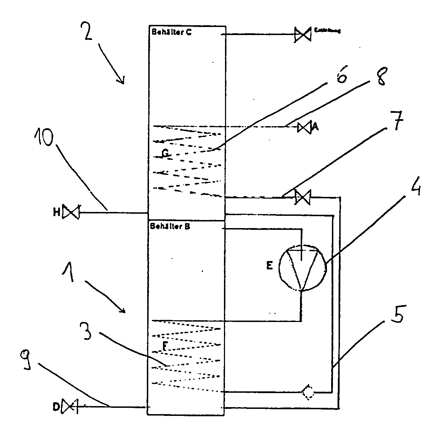

Die Erfindung wird nachstehend anhand eines in der Zeichnung dargestellten Ausführungsbeispiels näher erläutert, in welcher schematisch der Aufbau der Anlage wiedergegeben ist.

Die Anlage zur Durchführung des erfindungsgemäßen Verfahrens besteht aus einem ersten Behälter 1, in dem sich ein Kondensator 3 befindet, und einem zweiten Behälter 2, in dem sich ein Wärmetauscher 6 befindet. Der erste Behälter 1 ist als Verdampfungsgefäß zur Verdampfung der zu behandelnden Flüssigkeit und der Kondensator 3 als Wärmetauscher ausgebildet. Dem Kondensator 3 ist ein Verdichter 4 zur Kompression der aus dem als Verdampfungsgefäß ausgebildeten Behälter 1 abgezogenen Dämpfe der zu behandelnden Flüssigkeit vorgeschaltet und eine Leitung 5 zur Überleitung der in dem Kondensator 3 teilkonden-sierten Dämpfe in einen zweiten Behälter 2 nachgeschaltet.

Der Verdichter 4 ist als Pumpe oder Kompressor ausgeführt. Dem Wärmetauscher 6 im zweiten Behälter 2 ist ein Zufluß 8 für die zu behandelnde Flüssigkeit vorgeschaltet und eine Leitung 7 zur Überleitung der vorgewärmten zu behandelnden Flüssigkeit in den ersten Behälter 1 nachgeschaltet. Der Wärmetauscher 6 wirkt als Kondensator zur Restkondensation der dem zweiten Behälter 2 über die dem im ersten Behälter befindlichen Kondensator 3 nachgeschaltete Leitung 5 zugeführten teilkondensierten Dämpfe.

Im zweiten Behälter 2 befindet sich der Abfluß 10 für die aus dem Verfahren gewonnene Flüssigkeit und im ersten Behälter 1 der Abfluß 9 für die während des Verdampfungsschrittes anfallende Sole. Der zweite Behälter 2 ist über dem ersten Behälter 1 angeordnet.

Das erfindungsgemäße, mittels der in der Zeichnung wiedergegebenen Anlage ausführbare, Verfahren zur Behandlung von Flüssigkeiten dient insbesondere zum Entsalzen, Enthärten und Desinfizieren von Wasser mittels Destillation. Die zu behandelnde Flüssigkeit wird zum Verdampfen und anschließend zum Kondensieren gebracht. Für die Verdampfung der zu behandelnden Flüssigkeit wird die durch die Kondensation der durch Kompression er-wärmten Dämpfe der zu behandelnden Flüssigkeit freiwerdende Wärme eingesetzt. Für die Erwärmung der zu behandelnden, frisch zugeführten Flüssigkeit wird die durch die Restkon-densation der durch Kompression erwärmten und schon teilkondensierten Dämpfe der zu behandelnden Flüssigkeit freiwerdende Wärme eingesetzt.

## Patentansprüche

1. Verfahren zur Behandlung von Flüssigkeiten, insbesondere zum Entsalzen, Enthärten und Desinfizieren von Wasser, mittels einstufiger Destillation, wobei bei der Destillation als Wärmeenergie zur Verdampfung die bei der Kondensation der Dämpfe freiwerdende Wärmeenergie ausgenützt wird, **dadurch gekennzeichnet, daß** die zu kondensierenden Dämpfe vor der Kondensation abgezogen und zur Erwärmung komprimiert werden, worauf dann die Kondensation im Wärmeaustausch mit der zu verdampfenden zu behandelnden Flüssigkeit erfolgt.

2. Verfahren nach Anspruch 1, **dadurch gekennzeichnet, daß** für die Erwärmung der zu behandelnden, frisch zugeführten Flüssigkeit die durch die Restkondensation der durch Kompression erwärmten und schon teilkondensierten Dämpfe der zu behandelnden Flüssigkeit freiwerdende Wärme eingesetzt wird.

3. Anlage zur Durchführung des Verfahrens nach Anspruch 1 oder 2, bestehend aus einem ersten Behälter in dem sich ein Kondensator befindet und einem zweiten Behälter in dem sich ein Wärmetauscher befindet, **dadurch gekennzeichnet, daß** der erste Be-hälter (1) als Verdampfungsgefäß zur Verdampfung der zu behandelnden Flüssigkeit und der Kondensator (3) als Wärmetauscher ausgebildet ist, wobei dem Kondensator (3) ein Verdichter (4) zur Kompression der Dämpfe der zu behandelnden Flüssigkeit vorgeschaltet ist und eine Leitung (5) zur Überleitung der in dem Kondensator (3) teilkondensierten Dämpfe in einen zweiten Behälter (2) nachgeschaltet ist.

4. Anlage nach Anspruch 3, **dadurch gekennzeichnet, daß** der Verdichter (4) als Pumpe oder Kompressor ausgeführt ist.

5. Anlage nach Anspruch 3 oder 4, **dadurch gekennzeichnet, daß** dem Wärmetauscher (6) im zweiten Behälter (2) ein Zufluß (8) für die zu behandelnde Flüssigkeit vorgeschaltet und eine Leitung (7) zur Überleitung der vorgewärmten zu behandelnden Flüssigkeit in den ersten Behälter (1) nachgeschaltet ist.

6. Anlage nach Anspruch 5, **dadurch gekennzeichnet, daß** der im zweiten Behälter (2) befindliche Wärmetauscher (6) mit seinen Außenflächen als Kondensator zur Restkondensation der dem zweiten Behälter (2) über die dem im ersten Behälter befindlichen Kondensator (3) nachgeschaltete Leitung (5) zugeführten teilkondensierten Dämpfe ausgebildet ist.

7. Anlage nach einem der Ansprüche 3 bis 6, **dadurch gekennzeichnet, daß** sich im zweiten Behälter (2) der Abfluß (10) für die aus dem Verfahren gewonnene Flüssigkeit und im ersten Behälter (1) der Abfluß (9) für die während des Verdampfungsschrittes an-fallende Sole befindet.

8. Anlage nach einem der Ansprüche 3 bis 6, **dadurch gekennzeichnet, daß** der zweite Behälter (2) über dem ersten Behälter (1) angeordnet ist.
